Europäisches Patentamt

European Patent Office

Office européen des brevets

(11) Publication number: **0 238 756**
**A2**

(12)

# EUROPEAN PATENT APPLICATION

(21) Application number: 86309805.9

(22) Date of filing: 16.12.86

(51) Int. Cl.⁴: **C 08 J 5/18,** C 08 L 23/04, C 08 L 23/12, C 08 L 25/02

(30) Priority: 30.12.85 US 814716

(43) Date of publication of application: 30.09.87 Bulletin 87/40

(84) Designated Contracting States: **BE DE FR GB IT NL**

(71) Applicant: **MOBIL OIL CORPORATION, 150 East 42nd Street, New York New York 10017 (US)**

(72) Inventor: **Bahl, Surinder Kumar, 155 Sector 16-A, Chandigarh 160016 (IN)**
Inventor: **Canterino, Peter John, 39 Mary Drive, Towaco New Jersey 07082 (US)**
Inventor: **Shaw, Richard Gregg, 260 Carlton Avenue, Piscataway New Jersey 08854 (US)**

(74) Representative: **Cooper, John Anthony et al, Mobil Court 3 Clements Inn, London WC2A 2EB (GB)**

(54) Blends of linear low density polyethylene, polypropylene and aromatic polymers and high modulus films thereof.

(57) Films containing linear low density polyethylene having a high modulus and good tear strength for the high modulus are obtained by blending therewith minor amounts of polystyrene or other aromatic polymer, and polypropylene.

EP 0 238 756 A2

F-3845

## BLENDS OF LINEAR LOW DENSITY POLYETHYLENE, POLYPROPYLENE AND AROMATIC POLYMERS AND HIGH MODULUS FILMS THEREOF

Linear low and medium density polyethylene copolymers (LLDPE) are widely used commercially in films which are conventionally prepared by blown film extrusion. Such films have generally good properties, but often exhibit undesirably low stiffness for many uses.

In commonly assigned U.S. Patent 4,565,847, we described films of LLDPE, polypropylene and ethylene-propylene rubbers having improved stiffness and good tear strength.

Similarly, improvements in machine direction (MD) tear strength and stiffness of films are obtained by blending small amounts of polystyrene (up to about 10 weight percent) with LLDPE as described in commonly assigned U.S. Patent 4,579,912. Higher amounts of polystyrene in excess of about 10 weight percent causes drastic loss of tear strength.

In accordance with this invention both polystyrene (PS), or other aromatic polymer, and polypropylene are (PP) blended with LLDPLE to give films with a high modulus and with better tear strength than can be obtained with LLDPE/PP or LLDPE/PS blends.

The polymer blends of this invention comprise a major proportion linear low density polyethylene (LLDPE), and polypropylene (PP) and a polymer of an aromatic hydrocarbon in minor proportions. The proportions are selected to obtain films of high modulus and acceptable tear strength.

The blends of this invention generally comprise:

60 to 95 weight percent of a linear low density copolymer of ethylene and an olefin having 4 to 10 carbon atoms (LLDPE);

1 to 20 weight percent of polypropylene (PP) or a high propylene content copolymer; and

1 to 20 weight percent of a polymer of an aromatic monomer.

The amounts of polypropylene and aromatic polymer are selected to achieve the desired stiffness (modulus) and the amounts can vary somewhat depending on the alpha-olefin comonomer used to prepare the LLDPE, the melt index of the LLDPE and other factors. Similarly, the ratio of PP to aromatic polymer is selected to achieve the desired tear strength and modulus can vary depending on the nature of the LLDPE and the amount of PP. Generally, the proportion of PP to aromatic polymer is from 8:1 to 1:8, preferably 5:1 to 1:5 and most preferably 1:3 to 3:1.

Preferred compositions comprise 75 to 90 weight percent of LLDPE; 5 to 15 weight percent PP; and 5 to 15 weight percent of the aromatic polymer, most preferably polystyrene.

The blends of this invention can be physical blends of pellets of the separate ingredient or melt blends. The blends in either case are intended to ultimate formation into articles such as films having a high modulus and good tear strength.

The term linear low density polyethylene (LLDPE) as used herein refers to copolymers of ethylene and an alpha-olefin having 4 to 10 carbon atoms. Representative alpha-olefins include butene, hexene and octene. Generally, the LLDPE contains up to about 10 weight percent of polymerized alpha-olefin, has a density of 0.9 to 0.94 and a melt index of 0.2 to 10. The preparation of LLDPE is described in U.S. Patent 4,076,698. LLDPE is also commercially available.

The polypropylene (PP) referred to herein includes any of the known homopolymers of this class, as well as ethylene-propylene copolymers having a high propylene content which is generally about 90 weight percent. Ethylene-propylene copolymers with a propylene content of about 97 weight have been found to be suitable, many of which are commercially available. The polypropylene homopolymer or copolymer is selected for its ability to impart stiffness to the blend as shown by increased secant modulus. Accordingly, ethylene-propylene copolymers having a sufficient propylene content to impart the desired stiffness are useful in this invention.

Polystyrene and poly(para-methylstyrene) resins are particularly suitable as the aromatic polymer which is blended with the ethylene polymer. The aromatic polymer can also contain comonomers providing that the aromatic monomer is the predominant constituent. For instance, high impact polystyrene can be used.

Compatibilizers can be used in small amounts up to about 2 weight percent of the composition. Suitable compatibilizers include block copolymers of styrene-ethylene propylene-styrene (Kraton G), block copolymers of styrene and ethylene (Shelvis) and ethylene propylene copolymers (Vistalon 3707).

The resin blends are formed into films in the conventional manner. Preferably, films are made by blown film extrusion using conventional techniques to obtain films which are generally from 0.012 to 0.12 mm (0.5 to 5 x $10^{-3}$ inch) in thickness.

The invention is illustrated by the following non-limiting examples.

EXAMPLES 1-6

A series of runs using an LLDPE copolymer of ethylene and hexene having a melt index of 0.8 and a 0.920 density, polypropylene (PP) and polystyrene (PS) were made. 0.025 mm and 0.076 mm (1 x $10^{-3}$ inch and 3 x $10^{-3}$ inch) were prepared, and tear strength and secant modulus were measured. The results are shown in Table 1.

TABLE 1

| Example | C-1 | C-2 | C-3 | 1 | 2 | 3 | 4 | 5 | 6 |
|---|---|---|---|---|---|---|---|---|---|
| LLDPE | 100 | 90 | 90 | 85 | 80 | 75 | 85 | 75 | 83 |
| PS 1240 | -- | -- | 10 | 5 | 10 | 15 | 10 | 10 | 2 |
| PP 4240 | -- | 10 | -- | 10 | 10 | 10 | 5 | 15 | 15 |

Elmendorff Tear
[g/cm(g/1 x 10$^{-3}$ inch)]

| | C-1 | C-2 | C-3 | 1 | 2 | 3 | 4 | 5 | 6 |
|---|---|---|---|---|---|---|---|---|---|
| 0.025 mm (0.001 inch) MD | 1512(384) | 1264(321) | 646(164) | 783(199) | 472(120) | 283(72) | 590(150) | 279(71) | 929(236) |
| TD | 2555(649) | 3027(769) | 2330(592) | 2106(535) | 1386(352) | 614(156) | 1594(405) | 1654(420) | 1846(469) |
| 0.076 mm (0.003 inch) MD | 2028(515) | 2063(524) | 1724(438) | 1587(403) | 1386(352) | 1193(303) | 1476(375) | 1071(272) | 1583(402) |
| TD | 2441(620) | 2091(531) | 2665(677) | 2004(509) | 2094(532) | 1559(396) | 2472(628) | 1630(414) | 1898(482) |

Secant Modulus
[x 10$^4$ kPa (x 10$^4$ psi)]

| | C-1 | C-2 | C-3 | 1 | 2 | 3 | 4 | 5 | 6 |
|---|---|---|---|---|---|---|---|---|---|
| 0.025 mm (0.001 inch) MD | 18.6(2.70) | 24.5(3.56) | 38.6(5.60) | 34.1(4.94) | 43.8(6.35) | 51.8(7.52) | 41.4(6.01) | 43.7(6.34) | 28.2(4.10) |
| TD | 19.5(2.83) | 17.2(2.50) | 27.8(4.03) | 26.4(3.83) | 30.6(4.44) | 31.2(4.53) | 28.8(4.18) | 28.1(4.08) | 32.5(4.72) |
| 0.076 mm (0.003 inch) MD | 20.9(3.04) | 28.5(4.14) | 38.8(5.63) | 33.9(4.92) | 42.4(6.15) | 58.9(8.55) | 44.1(6.40) | 48.0(6.96) | 34.2(4.96) |
| TD | 20.7(3.0) | 25.2(3.65) | 26.2(3.80) | 31.2(4.53) | 35.7(5.18) | 39.7(5.76) | 31.9(4.63) | 36.2(5.25) | 33.1(4.80) |

F-3845

- 4 -

0238756

F-3845                                    - 5 -

EXAMPLES 7-12

        In the manner used in Examples 1-6 another series of runs were made in which the LLDPE was a copolymer of the ethylene and hexene having a 0.7 melt index and a density of 0.926. The results are shown in Table 2.

TABLE 2

| Example | C-4 | C-5 | C-6 | 7 | 8 | 9 | 10 | 11 | 12 |
|---|---|---|---|---|---|---|---|---|---|
| LLDPE | 100 | 90 | 90 | 85 | 80 | 75 | 85 | 75 | 83 |
| PS | | | 10 | 5 | 10 | 15 | 10 | 10 | 2 |
| PP | | 10 | | 10 | 10 | 10 | 5 | 15 | 15 |

Elmendorff Tear
[g/cm (g/1 x $10^{-3}$ inch)]

| | C-4 | C-5 | C-6 | 7 | 8 | 9 | 10 | 11 | 12 |
|---|---|---|---|---|---|---|---|---|---|
| 0.025 mm (0.001 inch) MD | 890(226) | 846(215) | 1063(270) | 858(218) | 476(121) | 433(110) | 898(228) | 307(78) | 429(109) |
| TD | 2441(620) | 2382(605) | 1783(453) | 1799(457) | 1402(356) | 1059(269) | 1772(450) | 602(153) | 732(186) |

Secant Modulus
[x $10^4$ kPa (x $10^4$ psi)]

| | C-4 | C-5 | C-6 | 7 | 8 | 9 | 10 | 11 | 12 |
|---|---|---|---|---|---|---|---|---|---|
| 0.025 mm (0.001 inch) MD | 27.6(4.00) | -- | -- | 66.4(8.15) | 56.7(8.22) | -- | 65.5(9.50) | -- | |
| TD | 33.1(4.80) | -- | -- | 42.4(6.15) | 41.4(6.00) | -- | 46.2(6.70) | -- | |

Elmendorff Tear

| | C-4 | C-5 | C-6 | 7 | 8 | 9 | 10 | 11 | 12 |
|---|---|---|---|---|---|---|---|---|---|
| 0.076 mm (0.003 inch) MD | 1307(332) | 1208(307) | 1406(357) | 1161(295) | 996(253) | 878(223) | 1563(397) | 1008(256) | |
| TD | 1957(497) | 1720(437) | 2083(529) | 2008(510) | 1712(435) | 1224(311) | 1240(315) | 1421(361) | |

F-3845 — 7 —

WE CLAIM:

1. A composition comprising a blend of:
60 to 95 weight percent of a linear low density copolymer of ethylene and an olefin having 4 to 10 carbon atoms;
1 to 20 weight percent of polypropylene or propylene-ethylene copolymer with a high propylene content; and
1 to 20 weight percent of a polymer of an aromatic monomer.

2. The composition of claim 1 in which the linear low density copolymer comprises 75 to 90 weight percent; polypropylene comprises 5 to 15 weight percent; and the polymer of an aromatic monomer comprises 5 to 15 weight percent of the total composition.

3. The blend of claim 1 in which the polymer of an aromatic monomer is polystyrene.

4. The blend of claim 2 in which the polymer of an aromatic monomer is polystyrene.

5. The composition of claim 1, 2 or 3 in which the olefin is butene.

6. The composition of claim 1, 2 or 3 in which the olefin is hexene.

7. The composition of claim 1, 2 or 3 in which the olefin is octene.

8. A film of the composition of any one of the preceeding claims.

9936H/0866H